(19) Europäisches Patentamt
European Patent Office
Office européen des brevets

(11) **EP 2 508 869 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
*G01N 21/3504* *(2014.01)*   *G01N 21/03* *(2006.01)*
*G01N 21/31* *(2006.01)*

(21) Anmeldenummer: **11002848.7**

(22) Anmeldetag: **05.04.2011**

(54) **Konzentrationsmessgerät, Konzentrationsmessanordnung und Konzentrationsmessverfahren**

Concentration measurement device, concentration measurement assembly and concentration measurement method

Appareil de mesure de concentration, agencement de mesure de concentration et procédé de mesure de concentration

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.10.2012 Patentblatt 2012/41**

(73) Patentinhaber: **SICK AG**
**79183 Waldkirch (DE)**

(72) Erfinder:
• **Schiffler, Ingo**
**79115 Freiburg (DE)**
• **Beyer, Thomas**
**79111 Freiburg (DE)**

(74) Vertreter: **Manitz, Finsterwald & Partner GbR**
**Postfach 31 02 20**
**80102 München (DE)**

(56) Entgegenhaltungen:
WO-A1-99/13303       US-A- 5 303 036
US-A1- 2009 236 524   US-A1- 2010 265 492

**Beschreibung**

Die Erfindung betrifft ein Konzentrationsmessgerät zur Bestimmung einer Gas- oder Partikelkonzentration in einem Messvolumen, eine Konzentrationsmessanordnung mit einem Messvolumen und einem solchen Konzentrationsmessgerät und ein Konzentrationsmessverfahren, das mit einem solchen Konzentrationsmessgerät durchgeführt werden kann.

Zur Messung von Konzentrationen von Gasoder Partikelkonzentrationen in einem Messvolumen werden bei bekannten Lösungen Konzentrationsmessgeräte eingesetzt, die ein Gehäuse aufweisen, das mit einer Öffnung z.B. an ein Messvolumen angeflanscht werden kann, das ein Medium enthält, in dem die Konzentration eines bestimmten Gases oder einer bestimmten Partikelsorte bestimmt werden soll.

Dazu ist eine Lichtquelle zum Aussenden von Messlicht durch das Gehäuse in das Messvolumen vorgesehen. Mit einem Lichtempfänger wird das Messlicht nach seinem Durchgang durch das Messvolumen empfangen, wobei der Lichtempfänger z.B. in demselben Gehäuse wie der Lichtsender angeordnet sein kann oder an einem zweiten Gehäuse, das ebenfalls mit einer Öffnung an dem Messvolumen angeflanscht ist. Im erstgenannten Fall ist z.B. auf der gegenüberliegenden Seite des Messvolumens ein entsprechender Reflektor angeordnet, der das Messlicht nach dem ersten Durchgang durch das Messvolumen in Richtung des Lichtempfängers zurückreflektiert.

Mit Hilfe einer Auswerteeinheit kann aus der Absorption des Messlichts auf dem Weg vom Lichtsender zum Lichtempfänger die Gas- oder Partikelkonzentration bestimmt werden.

Lichtsender, Lichtempfänger, Auswerteeinheit und gegebenenfalls vorhandene optische Elemente, wie zum Beispiel Linsen, bilden einen optischen Analysator.

Ein häufiges Anwendungsgebiet derartiger Konzentrationsmessgeräte ist die Bestimmung der Sauerstoffkonzentration in einem Medium, das sich in einem Messvolumen befindet oder ein entsprechendes Messvolumen durchströmt. Im Folgenden wird als zu messendes Gas oftmals Sauerstoff angegeben, wobei entsprechende Konzentrationsmessgeräte jedoch in analoger Weise auch für die Konzentrationsbestimmungen anderer Gase vorgesehen und ausgestaltet sein bzw. verwendet werden können.

Dabei ist es wünschenswert, dass nur die Sauerstoffkonzentration in diesem Messvolumen gemessen wird. Optische Analysatoren haben jedoch freie Lichtwege zwischen den enthaltenen optischen Elementen und sind zur Vermeidung von hohen Temperaturen und Verschmutzung meist ein Stück vom eigentlichen Messvolumen abgesetzt, insbesondere wenn heißes oder korrosives Gas im Messvolumen ist. Die freien Strecken (Totvolumina) sollten - bei der Messung von Sauerstoffkonzentrationen - sauerstofffrei sein oder der dort enthaltene Sauerstoff muss rechnerisch aus dem Messwert entfernt werden. Schließlich ist es bei vielen Anwendungen notwendig, dass das Konzentrationsmessgerät von dem zu messenden Gas in dem Messvolumen isoliert ist, um z.B. die Messung von heißen Gasen zu ermöglichen.

Um sauerstofffreie Geräte bzw. sauerstofffreie Totvolumina zwischen dem Messvolumen und dem eigentlichen optischen Analysator zu erhalten, werden bei bekannten Lösungen Spülgase eingesetzt, die eine andere Zusammensetzung haben, als das zu messende Gas. So wird z.B. bei Sauerstoffmessgeräten das entsprechende Totvolumen mit stickstoff- oder anderem sauerstofffreiem Gas, z.B. Wasserdampf, gespült.

Andere Lösungen sehen vor, dass der eigentliche optische Analysator und die Licht leitende Optik mit einer permanenten und sauerstofffreien Gasfüllung oder in einem Vakuum dauerhaft gekapselt sind.

Die Spülung mit sauerstofffreiem Gas ist dabei aufwendig und kostenintensiv, da die Gase beschafft, gelagert und aufbereitet werden müssen. Die Spülung muss insbesondere bei sicherheitsrelevanten Anwendungen genau überwacht werden. Eine Kapselung birgt andererseits die Gefahr der Undichtigkeit.

Andere Ansätze, wie sie z.B. in WO 2006/030059 beschrieben ist, versuchen die freien Strecken zwischen Lichtquelle, Linsen und Empfänger möglichst gering zu halten, so dass der dort noch enthaltene Sauerstoff nicht ins Gewicht fällt. Durch die daraus entstehende Nähe des optischen Analysators zum Messvolumen können aber z.B. bei Messung von heißem Gas Temperaturprobleme auftreten.

Schließlich ist es bei bekannten Lösungen vorgesehen, dass die freien Strecken auf dem Weg des Lichts zwischen dem optischen Analysator und dem Messvolumen bestimmt werden, um den dort enthaltenen Sauerstoff rechnerisch von einem Messwert abzuziehen, wobei hier die Gefahr von Fehlern besteht, insbesondere, wenn Druck oder Temperatur in der Messstrecke und den Totvolumina unterschiedlich sind.

Ein Konzentrationsmessgerät mit den Merkmalen des Oberbegriffs des Anspruchs 1 ist aus WO 2006/030059 oder US 2009/0236524 A1 bekannt.

Es ist die Aufgabe der Erfindung, ein Konzentrationsmessgerät bzw. eine Konzentrationsmessanordnung und ein Konzentrationsmessverfahren anzugeben, mit deren Hilfe der mögliche Einfluss des Messlichtwegs außerhalb des Messvolumens auf die Konzentrationsbestimmung möglichst gering gehalten wird.

Diese Aufgabe wird mit einem Konzentrationsmessgerät mit den Merkmalen des Anspruchs 1, einer Konzentrationsmessanordnung mit den Merkmalen des Anspruchs 7 bzw. einem Konzentrationsmessverfahren mit den Merkmalen des Anspruchs 8 gelöst. Unteransprüche sind auf besondere Ausführungsformen und Ausgestaltungen gerichtet.

Ein erfindungsgemäßes Konzentrationsmessgerät zeichnet sich dadurch aus, dass in dem Gehäuse, in dem die Lichtquelle und der Lichtempfänger angeordnet sind bzw. in den Gehäusen, in denen die Lichtquelle bzw. der Lichtempfänger angeordnet sind, wenigstens ein Feststoffkörper derart angeordnet ist, dass der Messlichtweg innerhalb des Gehäuses bzw. der Gehäuse weitgehend durch diesen Feststoff führt. Auf diese Weise wird die Gefahr beseitigt bzw. verringert, dass sich auf dem Weg zwischen Lichtquelle, Lichtempfänger und dem Messvolumen Gas befindet, dessen Konzentration in dem Messvolumen eigentlich bestimmt werden soll. Die Verfälschung durch solches auf dem Weg zum Messvolumen befindliche Gas ist also minimiert.

Auf diese Weise ist z.B. bei der Sauerstoffmessung eine nach Sicherheitsgesichtspunkten zuverlässig sauerstofffreie Optik zwischen Lichtquelle bzw. Empfänger und Messvolumen über eine gewisse Distanz zu erreichen. Es können problemlos auch Strahldurchmesser von größer als z.B. 4 mm erzeugt werden, um den Einfluss von Staub in dem Messvolumen zu verringern. Ohne die Gefahr der Verfälschung durch Gas auf dem Weg zwischen Lichtquelle bzw. Empfänger und Messvolumen kann die Distanz des optischen Analysators von dem Messvolumen erhöht werden, um eine Temperaturentkopplung zu erreichen. Außerdem muss ein Feststoff im Gegensatz zum Beispiel zu Spülgas oder Flüssigkeitsfüllungen nicht überwacht werden.

Bei einer gewünschten Genauigkeit G zur Bestimmung einer Gas- oder Partikelkonzentration in einem Messvolumen mit einer Messlänge ML wird erfindungsgemäß derjenige Teil des Strahlengangs des Messlichts, welcher sich innerhalb des optischen Analysators befindet und nicht durch den wenigstens einen Festkörper führt, kürzer als eine Länge SL gewählt, die sich durch die Formel $SL = 2 \cdot G \cdot ML/K$ bestimmt. Dabei bezeichnet K die Gas- oder Partikelkonzentration in den Totvolumina des optischen Analysators, die sich dadurch definieren, dass sie sich außerhalb des Messvolumens befinden und dass der Strahlengang nicht durch den wenigstens einen Festkörper führt. Auf diese Weise ist sichergestellt, dass bei einer gewünschten Messgenauigkeit G der Beitrag des nicht durch den Feststoff gehenden Teils des Lichtweges auf jeden Fall kleiner ist als die doppelte angestrebte Genauigkeit. Damit eignet sich das erfindungsgemäße Konzentrationsmessgerät insbesondere zur Bestimmung einer Gas- oder Partikelkonzentration in einem Messvolumen mit einer Messlänge ML bei einer gewünschten Genauigkeit G.

Die Gas- oder Partikelkonzentration K des zu messenden Gases oder der zu messenden Partikel, wie sie in den Totvolumina vorliegt, kann - muss aber nicht - der zu messenden Konzentration des zu messenden Gases oder der zu messenden Partikel im Messvolumen entsprechen. Z.B. kann sie auf Grund unterschiedlicher Druck- und/ oder Temperaturverhältnisse abweichen, oder weil ein Totvolumen keine Verbindung zum Volumen hat.

Die Erfindung dient der möglichst genauen Bestimmung der Konzentration des zu messenden Gases oder der zu messenden Partikel in dem Messvolumen und berücksichtigt die Tatsache, dass sich in den Totvolumina des optischen Analysators ebenfalls Gas der zu messenden Art ("zu messendes Gas") oder Partikel der zu messenden Art ("zu messende Partikel") befinden können, das/die aber keinen oder möglichst geringen Einfluss haben sollen.

Der Begriff "Totvolumina" wird im vorliegenden Text für diejenigen Teile des optischen Analysators verwendet, in denen der Strahlengang des Messlichtes nicht durch den wenigstens einen Festkörper geht und in dem sich gegebenenfalls Gas oder Partikel befinden können, die dem in dem Messvolumen zu messenden Gas bzw. den in dem Messvolumen zu messenden Partikeln entsprechen. Obwohl der Begriff in der Regel im Plural verwendet wird, sind Anordnungen nicht ausgeschlossen und mit umfasst, in denen sich nur ein solches Totvolumen befindet.

Bei höheren Anforderungen können auch andere Werte für SL als obere Grenze festgelegt werden, zum Beispiel $SL' = G \cdot ML/K$ oder $SL'' = 0,5 \cdot G \cdot ML/K$.

Erfindungsgemäß ist die Länge SL außerdem derart, dass bei einer Messlänge ML von 1 m in dem Messvolumen und einer Konzentration innerhalb der Totvolumina des Analysators von 20% eine Genauigkeit von 0,1% erreicht wird.

Prozentangaben beziehen sind im vorliegenden Text in der Regel auf Volumenprozent.

Wenn man also z.B. bei einer Sauerstoffmessung eine Genauigkeit von 0,1% Sauerstoff auf 1 m Messstrecke erreichen will, wählt man bei einer Sauerstoffkonzentration innerhalb der Totvolumina des Analysators von 20% eine maximale Länge des freien Lichtweges von 10 mm.

Der Feststoff des wenigstens einen Feststoffkörpers kann z.B. ein Material umfassen, das ansonsten auch für die optischen Elemente verwendet wird, wie sie in dem Konzentrationsmessgerät in an sich bekannter Weise zum Einsatz kommen (z.B. Spiegel, Linsen, Strahlteiler, Filter etc.). Insofern kann es sich bei dem Feststoff zum Beispiel um einen Glas- oder Quarzglaskörper handeln.

Als Lichtquelle in einem erfindungsgemäßen Konzentrationsmessgerät kann insbesondere eine kohärente Lichtquelle, z.B. eine Laserlichtquelle zum Einsatz kommen. Im vorliegenden Text wird der Begriff "Licht" nicht nur für sichtbares Licht sondern auch für elektromagnetische Wellen aus anderen Energiebereichen verwendet, z.B. Infrarot oder Ultraviolett.

Der wenigstens eine Feststoffkörper kann z.B. auch so ausgelegt werden, dass Messlicht an keiner optischen Fläche in sich zurückgeworfen wird, so dass Interferenzen vermieden werden. Dies kann z.B. mit verspiegelten oder schräg stehenden Flächen realisiert werden. Die optischen Flächen am Ende des Feststoffkörpers können z.B. auch verwendet werden, um einen Messlichtstrahl zu teilen, wenn zum einen der reflektierte Teil und zum anderen der transmittierte Teil verwendet wird. Interne Reflexionen an gekrümmten Oberflächen können zur Strahlformung benutzt werden.

Bei einer Ausführungsform ist vorgesehen, dass der Feststoff derart angeordnet ist, dass die Geometrie des Strahlengangs von sich darin ausbreitendem Messlicht im Wesentlichen der Geometrie eines entsprechenden Strahlengangs ohne einen solchen Feststoff entspricht. Der Feststoff hat also keine Licht leitende oder andere optische Wirkung und ersetzt nur den freien Lichtweg.

Für eine Ausführungsform, bei der der Feststoffkörper Bereiche umfasst, die wie optische Elemente wirken, also insbesondere Linsen- oder Reflektoreigenschaften aufweisen, ist vorteilhafterweise vorgesehen, dass die Geometrie des Strahlengangs in denjenigen Bereichen, die nicht wie optische Elemente wirken, im Wesentlichen der Geometrie eines entsprechenden Strahlengangs ohne dem Feststoff entspricht.

Optisch wirksame Bereiche, wie sie oben erwähnt sind, können in einen entsprechenden Festkörper integriert sein, einen weiteren Festkörper umfassen, der zum Beispiel angeklebt, aufgesprengt oder angepresst ist, oder durch einen unabhängigen weiteren Festkörper gebildet sein.

Eine erfindungsgemäße Konzentrationsmessanordnung weist ein Messvolumen und ein damit verbundenes, vorzugsweise daran angeflanschtes, erfindungsgemäßes Konzentrationsmessgerät auf. Eine solche Konzentrationsmessanordnung ist insbesondere dazu geeignet, die Konzentration eines Gases oder von Partikeln mit einer gewünschten Genauigkeit G zu bestimmen, wenn der nicht durch den wenigstens einen Feststoffkörper führende Teil des Strahlengangs innerhalb des optischen Analysators aber außerhalb des Messvolumens eine Gesamtlänge hat, die kleiner ist als eine Länge SL, die sich nach der Formel $SL = 2 \cdot G \cdot ML/K$ bestimmt, wobei ML die Länge des Lichtweges in dem Messvolumen bezeichnet und K die Gas- oder Partikelkonzentration des zu messenden Gases in dem nicht zum Messvolumen gehörenden Teil des Strahlengangs, also in den Totvolumina des optischen Analysators.

Bei einem erfindungsgemäßen Konzentrationsmessverfahren zur Bestimmung einer Gas- oder Partikelkonzentration in einem Messvolumen wird Licht durch wenigstens ein Gehäuse in das Messvolumen geschickt, wobei das Licht in dem Gehäuse weitgehend durch wenigstens einen Körper aus Feststoff geschickt wird und der nicht durch den Feststoff führende Teil des Strahlengangs eine Gesamtlänge hat, die kleiner ist als eine Länge SL, wobei $SL = 2 \cdot G \cdot ML/K$ ist. G ist dabei die gewünschte Genauigkeit der Konzentrationsbestimmung auf einer Messlänge ML des Messvolumens bei einer Konzentration K des zu messenden Gases im Strahlengang innerhalb des optischen Analysators aber außerhalb des Messvolumens. Insofern eignet sich das erfindungsgemäße Konzentrationsverfahren zur Bestimmung einer Gas- oder Partikelkonzentration in einem Messvolumen mit einer Messlänge ML bei einer gewünschten Genauigkeit G, wenn in den Totvolumina des Analysators eine Gaskonzentration K herrscht.

Die besonderen Vorteile und bevorzugten Ausgestaltungen des erfindungsgemäßen Konzentrationsmessverfahrens ergeben sich in analoger Weise aus den obigen Schilderungen der besonderen Ausführungsformen und Vorteile des erfindungsgemäßen Konzentrationsmessgeräts.

Besonders vorteilhaft lässt sich ein erfindungsgemäßes Konzentrationsmessgerät, eine erfindungsgemäße Konzentrationsmessanordnung bzw. ein erfindungsgemäßes Konzentrationsmessverfahren einsetzen, um die Sauerstoffkonzentration in einem Messvolumen zu bestimmen. Gerade bei einer solchen Anwendung ist es von besonderem Vorteil, wenn keine Messergebnisverfälschung aufgrund eines Strahlengangs außerhalb des Messvolumens in einem Totvolumen vorliegen kann, in dem sich auch Sauerstoff (z.B. als Teil von Luft) befindet. Trotzdem kann mit der Erfindung sichergestellt werden, dass ein ausreichender Abstand des optischen Analysators von dem Messvolumen eingehalten werden kann, um z.B. eine Temperaturentkopplung zu gewährleisten.

Die Erfindung wird im Folgenden anhand der schematischen Figuren im Detail erläutert, die Ausführungsformen eines erfindungsgemäßen Konzentrationsmessgeräts darstellen.

Fig. 1    zeigt eine Ausführungsform eines erfindungsgemäßen Konzentrationsmessgeräts, wie es an ein Messvolumen angeflanscht werden kann, in schematischer Darstellung, und

Fig. 2    zeigt eine andere Ausführungsform eines erfindungsgemäßen Konzentrationsmessgeräts.

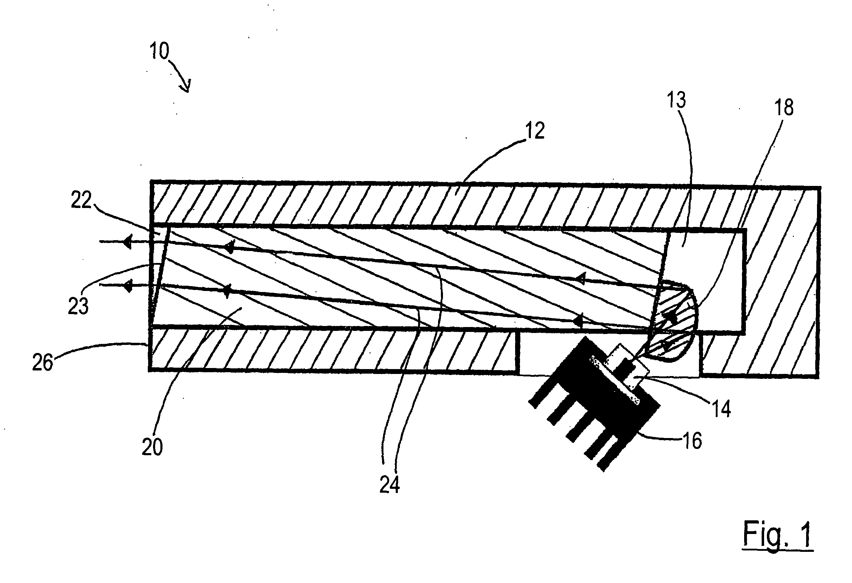

Fig. 1 zeigt einen Teil einer Ausführungsform eines erfindungsgemäßen Konzentrationsmessgerätes in schematischer Darstellung im Querschnitt. Ein Gehäuse 12, z.B. ein Edelstahlgehäuse, weist einen Hohlraum 13 auf, in dem sich ein Glaskörper 20 befindet. An dem Glaskörper 20 ist rückwärtig ein Glaskörper 18 angeklebt, der so geformt ist, dass er Messlicht 24, das von einem Laser 14, zum Beispiel einer Laserdiode, erzeugt wird, derart ablenkt, dass es durch den Glaskörper 20 gerichtet wird. Dazu kann die gewölbte Seite des Glaskörpers 18 z.B. verspiegelt sein. Bezugsziffer 16 bezeichnet z.B. einen Kühlkörper oder eine Platine oder ähnliches zur elektrischen Kontaktierung des Lasers 14, der durch eine Laserdiode gebildet sein kann.

Wie gezeigt, füllt der Glaskörper 20 den Hohlraum 13 in dem Gehäuse 12 nahezu vollständig in einer Weise aus, dass der Lichtweg des Messlichts 24 nahezu vollständig durch Glas läuft. Nur ein kleiner Bereich 22 des Messlichtweges ist bei dieser Ausführungsform nicht mit Glas gefüllt. Die Grenzflächen des Raumes 22 sind bei der gezeigten Ausführungsform so gewählt, dass keine Reflexion des Messlichts 24 an der Oberfläche 23 stattfindet. An dem Ende 26 wird das Konzentrationsmessgerät 10 in geeigneter und an sich bekannter Weise an ein nicht gezeigtes Messvolumen angeschlossen, zum Beispiel angeflanscht, in dem sich das Gas befindet, dessen Konzentration bestimmt werden soll.

Das Messlicht wird bei dieser Ausgestaltung durch das nicht gezeigte Messvolumen hindurchgeschickt. Auf der anderen Seite des Messvolumens kann sich eine entsprechende Anordnung befinden, wobei dann kein Laser vorgesehen ist, sondern ein Lichtempfänger, z.B. eine Fotodiode. Dies ermöglicht die Messung der Absorption und daraus der Konzentration des Gases in dem Messvolumen in an sich bekannter Weise. Die Wellenlänge des eingesetzten Lichts wird dabei z.B. so gewählt, dass sie insbesondere von den Bestandteilen des Gases absorbiert wird, dessen Konzentration bestimmt werden soll.

Bei einer alternativen Ausgestaltung ist zusammen mit dem Laser 14 auf derselben Seite des Messvolumens eine Fotodiode vorgesehen, so dass Messlicht detektiert werden kann, das in dem Messvolumen zurückreflektiert wird, bzw. an einem Reflektor am Ende des Messvolumens in an sich bekannter Weise zurückreflektiert wird.

Die Konzentration kann aus der Intensität des am Lichtempfänger empfangenen Messlichts bestimmt werden. Dabei kann z.B. die Absorption des Messlichts ausgewertet werden, die von der Konzentration des absorbierenden Materials abhängt. Grundsätzlich ist es auch möglich, Streulicht zu messen, das Auskunft über die Konzentration bzw. Menge von Gas in dem Messvolumen gibt.

Zum Einsatz bei der Bestimmung einer Konzentration mit einer Genauigkeit G (z.B. 0,1 %) bei einer durch die Dimension des Messvolumens bestimmten Messlänge ML (z.B. 1 m) und einer Konzentration K des zu messenden Gases, wie sie innerhalb der Totvolumina des optischen Analysators vorliegt (z.B. 20 %) ist die Gesamtlänge SL des Lichtwegs in dem Gehäuse 12, der nicht durch den Glaskörper 20 oder den Glaskörper 18 geht, so gewählt, dass sie kürzer ist als eine Länge SL, die sich nach folgender Formel bestimmt:

$$SL = 2 \cdot G \cdot ML/K.$$

Bei dem gezeigten Beispiel ist also insbesondere der Bereich 22 entsprechend gewählt.

Bei einer Messung, bei der die Absorption in einem Messvolumen zur Konzentrationsbestimmung ausgenutzt wird, entspricht die Messlänge ML zum Beispiel dem Durchmesser des durchstrahlten Messvolumens (bei einfacher Durchstrahlung) oder dem doppelten Durchmesser (bei zweifacher Durchstrahlung, z.B. in einer Reflexionsanordnung).

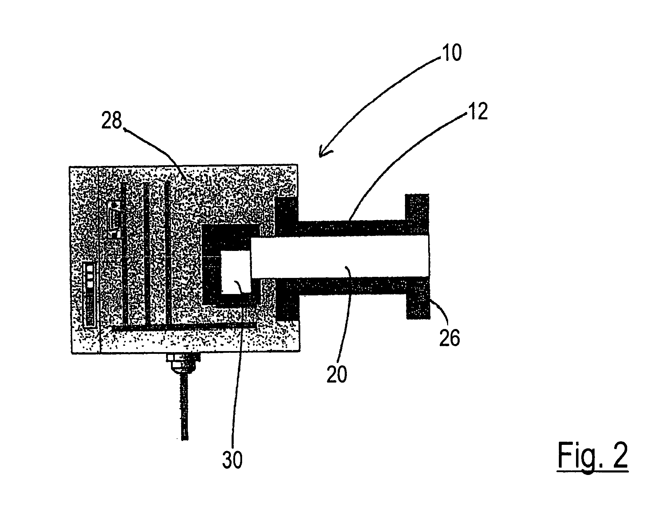

Fig. 2 zeigt in schematischer Darstellung eine andere Ausführungsform. Gleiche Elemente oder funktionsgleiche Elemente sind mit den gleichen Bezugsziffern bezeichnet. Hier ist eine optische Analyseeinheit 30 dargestellt, die in nicht gezeigter Weise eine Laserdiode als Lichtquelle und eine Fotodiode als Empfänger umfasst. Das Licht wird durch den Glaskörper 20 in Richtung eines nicht gezeigten Messvolumens geschickt, das an die Oberfläche 26 des Edelstahlkörpers 12 angeflanscht wird. In dem Messvolumen reflektiertes Licht wird durch den Glaskörper 20 zurück in Richtung des optischen Analysators 30 geschickt und dort von der Fotodiode detektiert. Aus der Menge des reflektierten Lichts kann auf die Konzentration eines Gases in dem Messvolumen geschlossen werden.

Schematisch ist hier noch ein Anschlussgehäuse 28 gezeigt, in dem sich die Anschluss- und Betriebselektronik für den optischen Analysator befindet.

Bezugszeichenliste

| | |
|---|---|
| 10 | Konzentrationsmessgerät |
| 12 | Gehäuse |
| 13 | Hohlraum |
| 14 | Laserdiode |
| 16 | Anschlussplatine |
| 18 | optischer Glaskörper |
| 20 | Glaskörper |
| 22 | Totvolumen |
| 23 | Glaskörperoberfläche |
| 24 | Strahlengang |
| 26 | Gehäuseoberfläche zum Anflanschen |
| 28 | Anschlussgehäuse |
| 30 | optischer Analysator |

Patentansprüche

1.  Konzentrationsmessgerät (10) zur Bestimmung einer Gas- oder Partikelkonzentration in einem Messvolumen, mit

    - wenigstens einem Gehäuse (12) mit einer Öffnung zur Verbindung mit dem Messvolumen,
    - einer Lichtquelle zum Aussenden von Messlicht (24) durch das wenigstens eine Gehäuse (12) in das Messvolumen,
    - einem Lichtempfänger zum Empfang des Messlichtes nach seinem Durchgang durch das Messvolumen, wobei der Lichtempfänger entweder in demselben Gehäuse (12) wie der Lichtsender oder einem zweiten Gehäuse mit einer Öffnung zur Verbindung mit dem Messvolumen angeordnet ist,
    - einer Auswerteeinheit, die ausgestaltet ist, aus dem am Lichtempfänger empfangenen Messlicht, insbesondere aus der Absorption des Messlichtes auf dem Weg vom Lichtsender zum Lichtempfänger, die Gas- oder Partikelkonzentration zu bestimmen,

**dadurch gekennzeichnet, dass**

in dem wenigstens einen Gehäuse (12) wenigstens ein Körper (18, 20) aus Feststoff derart angeordnet ist, dass der Messlichtweg (24) innerhalb des wenigstens einen Gehäuses (12) weitgehend durch den wenigstens einen Feststoffkörper (18, 20) führt, wobei der nicht durch den wenigstens einen Feststoffkörper (18, 20) führende Teil des Messlichtweges innerhalb des wenigstens einen Gehäuses eine Gesamtlänge hat, die kleiner ist als eine Länge SL, wobei

(i) SL = 2 · G · ML/K gilt und G die gewünschte Genauigkeit der Konzentrationsbestimmung auf einer Messlänge ML in dem Messvolumen ist und die Konzentration des zu messenden Gases oder der zu messenden Partikel innerhalb der in dem Gehäuse auftretenden Totvolumina K beträgt, und

(ii) die Länge SL derart gewählt ist, dass bei einer Messlänge ML von 1 m in dem Messvolumen und einer Konzentration des zu messenden Gases bzw. der zu messenden Partikelkonzentration innerhalb der in dem Gehäuse auftretenden Totvolumina von 20% eine Genauigkeit von 0,1% erreicht wird.

2. Konzentrationsmessgerät nach Anspruch 1, **dadurch gekennzeichnet, dass** der nicht durch den wenigstens einen Feststoffkörper (18, 20) führende Teil des Strahlengangs des Messlichtes eine Gesamtlänge hat, die kleiner als 10 mm, bevorzugt kleiner als 5 mm ist.

3. Konzentrationsmessgerät nach einem der Ansprüche 1 oder 2, **dadurch gekennzeichnet, dass** der wenigstens eine Feststoffkörper derart ist, dass die Geometrie des Strahlenganges von sich darin ausbreitendem Messlicht im Wesentlichen der Geometrie eines entsprechenden Strahlenganges ohne den Feststoff entspricht.

4. Konzentrationsmessgerät nach einem der Ansprüche 1 oder 2, **dadurch gekennzeichnet, dass** der wenigstens eine Feststoffkörper Bereiche umfasst, die wie optische Elemente wirken, insbesondere Linsen- oder Reflektoreigenschaften aufweisen.

5. Konzentrationsmessgerät nach Anspruch 4, **dadurch gekennzeichnet, dass** der wenigstens eine Feststoffkörper derart ist, dass die Geometrie des Strahlenganges von sich darin ausbreitendem Messlicht in denjenigen Bereichen, die nicht wie optische Elemente wirken, im Wesentlichen der Geometrie eines entsprechenden Strahlenganges ohne den Feststoff entspricht.

6. Konzentrationsmessgerät nach einem der Ansprüche 1 bis 5, **dadurch gekennzeichnet, dass** der wenigstens eine Feststoffkörper (18, 20) durch wenigstens einen Glaskörper (18, 20) gebildet ist.

7. Konzentrationsmessanordnung mit einem Messvolumen und einem damit verbundenen, vorzugweise daran angeflanschten, Konzentrationsmessgerät (10) nach einem der Ansprüche 1 bis 6.

8. Konzentrationsmessverfahren zur Bestimmung einer Gas- oder Partikelkonzentration in einem Messvolumen, bei dem Licht durch wenigstens ein Gehäuse (12) in das Messvolumen geschickt und aus aus dem Messvolumen empfangenen Messlicht, insbesondere aus der Absorption des Messlichtes, die Gas- oder Partikelkonzentration in dem Messvolumen bestimmt wird, **dadurch gekennzeichnet, dass** das Licht innerhalb des Gehäuses (12) weitgehend durch wenigstens einen Körper (18, 20) aus Feststoff geführt wird, wobei der nicht durch den wenigstens einen Feststoffkörper (18, 20) führende Teil des Messlichtweges innerhalb des wenigstens einen Gehäuses eine Gesamtlänge hat, die kleiner ist als eine Länge SL, wobei

(i) SL = 2 · G · ML/K gilt und G die gewünschte Genauigkeit der Konzentrationsbestimmung auf einer Messlänge ML in dem Messvolumen ist und die Konzentration des zu messenden Gases oder der zu messenden Partikel innerhalb der in dem Gehäuse auftretenden Totvolumina K beträgt, und

(ii) die Länge SL derart gewählt ist, dass bei einer Messlänge ML von 1 m in dem Messvolumen und einer Konzentration des zu messenden Gases bzw. der zu messenden Partikelkonzentration innerhalb der in dem Gehäuse auftretenden Totvolumina von 20% eine Genauigkeit von 0,1% erreicht wird.

9. Konzentrationsmessverfahren nach Anspruch 8, **dadurch gekennzeichnet, dass** der nicht durch den wenigstens einen Feststoffkörper (18, 20) führende Teil des Strahlengangs eine Gesamtlänge hat, die kleiner als 10 mm, bevorzugt kleiner als 5 mm ist.

10. Konzentrationsmessverfahren nach einem der Ansprüche 8 oder 9, **dadurch gekennzeichnet, dass** es mit einem Konzentrationsmessgerät (10) nach einem der Ansprüche 1 bis 6 durchgeführt wird.

**Claims**

1. A concentration measuring device (10) for determining a concentration of gas or particles in a measurement volume, comprising

- at least one housing (12) having an opening for communication with the measurement volume;
- a light source for transmitting measurement light (24) through the at least one housing (12) into the measurement volume;
- a light receiver for receiving the measurement light after its passage through the measurement volume, wherein the light receiver is arranged either in the same housing (12) as the light transmitter or in a second housing having an opening for communication with the measurement volume; and
- an evaluation unit which is designed to determine the concentration of gas or particles from the measurement light received at the light receiver, in particular from the absorption of the measurement light on the path from the light transmitter to the light receiver,

**characterized in that**
at least one body (18, 20) of solid material is arranged in the at least one housing (12) such that the measurement light path (24) largely passes through the at least one solid body (18, 20) within the at least one housing (12), with the portion of the measurement light path within the at least one housing not passing through the at least one solid body (18, 20) having a total length which is smaller than a length SL, where

(i) SL = 2 · G · ML/K is true and G is the desired accuracy of the concentration determination on a measurement length ML in the measurement volume and the concentration of the gas to be measured or of the particles to be measured within the dead volumes occurring in the housing amounts to K; and
(ii) the length SL is selected such that an accuracy of 0.1% is achieved with a measurement length ML of 1 m in the measurement volume and a concentration of the gas to be measured or of the particle concentration to be measured within the dead volumes occurring in the housing of 20%.

2. A concentration measuring device in accordance with claim 1, **characterized in that** the portion of the beam path of the measurement light not passing through the at least one solid body (18, 20) has a total length which is smaller than 10 mm, preferably smaller than 5 mm.

3. A concentration measuring device in accordance with one of the claims 1 or 2, **characterized in that** the at least one solid body is such that the geometry of the beam path of measurement light propagating therein substantially corresponds to the geometry of a corresponding beam path without the solid.

4. A concentration measuring device in accordance with one of the claims 1 or 2, **characterized in that** the at least one solid body comprises regions which act like optical elements, in particular have lens properties or reflector properties.

5. A concentration measuring device in accordance with claim 4, **characterized in that** the at least one solid body is such that the geometry of the beam path of measurement light propagating therein in those regions which do not act like optical elements substantially corresponds to the geometry of a corresponding beam path without the solid.

6. A concentration measuring device in accordance with any one of the claims 1 to 5, **characterized in that** the at least one solid body (18, 20) is formed by at least one glass body (18, 20).

7. A concentration measuring arrangement having a measurement volume and a concentration measuring device (10) connected thereto in accordance with any one of the claims 1 to 6.

8. A concentration measuring method for determining a concentration of gas or particles in a measurement volume, wherein light is sent through at least one housing (12) into the measurement volume and the concentration of gas or particles in the measurement volume is determined from measurement light received from the measurement volume, in particular from the absorption of the measurement light, **characterized in that** the light within the housing (12) is directed largely through at least one body (18, 20) of solid material, with the portion of the measurement light path within the at least one housing not passing through the at least one solid body (18, 20) having a total length which is smaller than a length SL, where

(i) SL = 2 · G · ML/K is true and G is the desired accuracy of the concentration determination on a measurement length ML in the measurement volume and the concentration of the gas to be measured or of the particles to be measured within the dead volumes occurring in the housing amounts to K; and
(ii) the length SL is selected such that an accuracy of 0.1% is achieved with a measurement length ML of 1 m in the measurement volume and a concentration of the gas to be measured or of the particle concentration to be measured within the dead volumes occurring in the housing of 20%.

**9.** A concentration measuring method in accordance with claim 8, **characterized in that** the portion of the beam path not passing through the at least one solid body (18, 20) has a total length which is smaller than 10 mm, preferably smaller than 5 mm

**10.** A concentration measuring method in accordance with one of the claims 8 or 9, **characterized in that** it is carried out using a concentration measuring device (10) in accordance with any one of the claims 1 to 6.

**Revendications**

**1.** Appareil de mesure de concentration (10) pour déterminer une concentration en gaz ou une concentration en particules dans un volume de mesure, comprenant

- au moins un boîtier (12) avec une ouverture pour la liaison avec le volume de mesure,
- une source de lumière pour émettre de la lumière de mesure (24) à travers ledit au moins un boîtier (12) jusque dans le volume de mesure,
- un récepteur de lumière pour recevoir la lumière de mesure après sa traversée du volume de mesure, de sorte que le récepteur de lumière est agencé soit dans le même boîtier (12) que l'émetteur de lumière soit dans un second boîtier avec une ouverture pour la liaison avec le volume de mesure,
- une unité d'évaluation qui est conçue pour déterminer, à partir de la lumière de mesure reçue au niveau du récepteur de lumière, et en particulier à partir de l'absorption de la lumière de mesure sur le trajet depuis l'émetteur de lumière jusqu'au récepteur de lumière, la concentration en gaz ou la concentration en particules,

**caractérisé en ce que**,
au moins un corps (18, 20) en matériau solide est agencé dans ledit au moins un boîtier (12) de telle façon que le trajet de la lumière de mesure (24) à l'intérieur dudit au moins un boîtier (12) passe largement à travers ledit au moins un corps (18, 20) en matériau solide, et la partie du trajet de lumière de mesure qui ne passe pas à travers ledit au moins un corps (18, 20) en matériau solide présente à l'intérieur dudit au moins un boîtier une longueur totale qui est plus petite qu'une longueur SL, de sorte que

(i) la relation SL = 2 · ML/K s'applique où G est la précision souhaitée de la détermination de concentration sur une longueur de mesure ML dans le volume de mesure, et la concentration en gaz à mesurer ou en particules à mesurer à l'intérieur du volume mort apparaissant dans le boîtier s'élève à K, et
(ii) la longueur SL est choisie de telle façon que pour une longueur de mesure ML de 1 m dans le volume de mesure et une concentration de 20 % du gaz à mesurer ou une concentration des particules à mesurer à l'intérieur du volume mort apparaissant dans le boîtier, on atteint une précision de 0,1 %.

**2.** Appareil de mesure de concentration selon la revendication 1, **caractérisé en ce que** la partie du trajet des rayons de la lumière de mesure qui ne passe pas à travers ledit au moins un corps (18, 20) en matériau solide a une longueur totale plus petite que 10 mm, et de préférence plus petite que 5 mm.

**3.** Appareil de mesure de concentration selon l'une des revendications 1 ou 2,
**caractérisé en ce que** ledit au moins un corps en matériau solide est tel que la géométrie du trajet des rayons de la lumière de mesure se propageant dans celui-ci correspond sensiblement à la géométrie d'un trajet correspondant des rayons en l'absence du matériau solide.

**4.** Appareil de mesure de concentration selon l'une des revendications 1 ou 2, **caractérisé en ce que** ledit au moins un corps en matériau solide inclut des régions qui ont l'effet d'éléments optiques, et présentent en particulier des propriétés de lentilles ou des propriétés de réflecteurs.

**5.** Appareil de mesure de concentration selon la revendication 4, **caractérisé en ce que** ledit au moins un corps en matériau solide est tel que la géométrie du trajet des rayons de la lumière de mesure se propageant dans celui-ci, dans celles des régions qui n'ont pas l'effet d'éléments optiques, correspond sensiblement à la géométrie d'un trajet correspondant des rayons en l'absence du matériau solide.

**6.** Appareil de mesure de concentration selon l'une des revendications 1 à 5, **caractérisé en ce que** ledit au moins un corps en matériau solide (18,20) est formé par au moins un corps en verre (18, 20).

**7.** Agencement de mesure de concentration comprenant un volume de mesure et un appareil de mesure de concentration (10) relié à celui-ci, et de préférence bridé sur celui-ci, selon l'une des revendications 1 à 6.

**8.** Procédé de mesure de concentration pour la détermination d'une concentration en gaz ou d'une concentration en particules dans un volume de mesure, dans lequel on envoie de la lumière à travers au moins un boîtier (12) jusque dans le volume de mesure, et, à partir de la lumière de mesure reçue depuis le volume de mesure, et en particulier à partir de l'absorption de la lumière de mesure, on détermine la concentration en gaz ou la concentration en particules dans le volume de mesure,
**caractérisé en ce que**
la lumière à l'intérieur du boîtier (12) est passée largement à travers au moins un corps (18, 20) en matériau solide, et la partie du trajet de la lumière de mesure qui ne passe pas à travers ledit au moins un corps (18, 20) en matériau solide présente à l'intérieur dudit au moins un boîtier une longueur totale qui est plus petite qu'une longueur SL, de sorte que

(i) la relation SL = 2 · ML/K s'applique où G est la précision souhaitée de la détermination de concentration sur une longueur de mesure ML dans le volume de mesure, et la concentration en gaz à mesurer ou en particules à mesurer à l'intérieur du volume mort apparaissant dans le boîtier s'élève à K, et
(ii) la longueur SL est choisie de telle façon que pour une longueur de mesure ML de 1 m dans le volume de mesure et une concentration de 20 % du gaz à mesurer ou une concentration des particules à mesurer à l'intérieur du volume mort apparaissant dans le boîtier, on atteint une précision de 0,1 %.

9.  Procédé de mesure de concentration selon la revendication 8, **caractérisé en ce que** la partie du trajet des rayons qui ne passe pas à travers ledit au moins un corps (18, 20) en matériau solide a une longueur totale qui est plus petite que 10 mm, de préférence plus petite que 5 mm.

10. Procédé de mesure de concentration selon l'une des revendications 8 ou 9, **caractérisé en ce qu'**il est mis en oeuvre avec un appareil de mesure de concentration (10) selon l'une des revendications 1 à 6.

Fig. 1

EP 2 508 869 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006030059 A
- US 20090236524 A1